# EUROPÄISCHE PATENTSCHRIFT

(11) **EP 1 925 499 B1**
(45) Veröffentlichungstag und Bekanntmachung des Hinweises auf die Patenterteilung: **20.04.2011**
(21) Anmeldenummer: 07022732.7
(22) Anmeldetag: 23.11.2007
(51) Int. Cl.: B60R 3/02

(54) **Zustiegs- und/oder Zufahrtshilfe für Fahrzeuge mit Personenbeförderung**
Access and/or entry assistance for vehicle transporting persons
Aide à la montée et/ou à l'accès pour des véhicules de transport de personnes

(30) Priorität: 24.11.2006 DE 102006056112
(43) Veröffentlichungstag der Anmeldung: 28.05.2008
(73) Patentinhaber: Kircher, Werner, 34292 Ahnatal (DE)
(72) Erfinder: Kircher, Werner, 34292 Ahnatal (DE)
(74) Vertreter: Dantz, Jan Henning

(56) Entgegenhaltungen:
- WO-A-98/06370
- DE-U- 1 906 283
- GB-A- 2 405 852
- US-A1- 2004 211 336

## Beschreibung

Die Erfindung betrifft eine Zustiegs- und/oder Zufahrtshilfe der im Oberbegriff des Anspruchs 1 angegebenen Gattung.

Zustiegs- und Zufahrtshilfen dieser Art sind in vielfältiger Form bekannt. Sie finden Anwendung bei Fahrzeugen zur Personenbeförderung, beispielsweise bei Bussen und Schienenfahrzeugen des öffentlichen Nahverkehrs, und erleichtern den Ein- und Ausstieg bei solchen Fahrzeugen dadurch, dass im Bereich von Haltestellen eine am jeweiligen Fahrzeug verschiebbar und ggf. auch verschwenkbar gelagerte Trittplatte in Form einer Rampe, eines linearen Tritts od. dgl. ausgefahren wird. Die Bezeichnung Zustiegs- und Zufahrtshilfe beinhaltet selbstverständlich auch deren Verwendung als Ausstiegs- und Ausfahrhilfe.

Die WO 98/06370 die dem Oberbegriff des Anspruchs 1 entspricht offenbart eine Zustiegshilfe für Fahrzeuge mit Personenbeförderung, bei der an einem Rahmen eine Trittplatte verfahrbar gelagert ist. Der Rahmen besteht aus zwei Seitenteilen, einem Endprofil und einer mittleren Stützstrebe. An den gegenüberliegenden Seitenteilen sind Führungsleisten festgelegt, an denen Gleitelemente verschiebbar gelagert sind, an denen die Trittplatte festgelegt ist.

Die beispielsweise aus Aluminium bestehende und mit einer rutschhemmenden Auflage versehene Trittplatte ist mit ihrer Rückseite an einen Rollwagen gekoppelt, der in unterhalb des Fahrzeugbodens angebrachten Laufschienen verschiebbar gelagert ist. Sie wird vorzugsweise vor dem Öffnen einer Fahrzeugtür zwischen einem Stand- und Wartebereich für zu befördernde Personen, beispielsweise einem Bahnsteig, und einer Bodenfläche im Einstiegsbereich des Fahrzeugs positioniert, um eventuell zwischen diesen beiden Bereichen bestehende Niveauunterschiede und/oder Spalte auszugleichen oder einfacher passierbar zu machen. Dadurch wird es beispielsweise auch Rollstuhlfahrern und Kinderwagenbenutzern möglich, einfach ein- bzw. auszusteigen. Nach Beendigung der Aus- und Einstiegsphase und evtl. nach dem Schließen der Fahrzeugtüren wird die Trittplatte wieder in ihre Ausgangsposition zurückgebracht.

Damit die Trittplatte zusammen mit den zugehörigen Funktionsteilen als komplette Baueinheit montiert werden kann, sind die Laufschienen für den Rollwagen an den Seitenteilen eines rechteckigen Rahmens befestigt, an dem auch die zum Hin- und Herfahren des Rollwagens benötigten Antriebsmittel montiert sind. Der Rahmen besteht insgesamt aus einer Schweißkontruktion und wird unter dem Fahrzeugboden montiert.

Zur Erzielung einer exakten Spurführung müssen die Seitenteile und die an ihnen befestigten Laufschienen exakt parallel zueinander ansgerichtet sein. Das gilt insbesondere dann, wenn es erwünscht ist, den Rollwagen zur Reduzierung der Herstellungskosten nur mit einem einzigen, in der Mitte zwischen den Seitenteilen wirksamen Antrieb zu versehen.

Aufgrund der erforderlichen Schweißarbeiten beim Zusammenbau der den Rahmen bildenden Seitenteile, Endprofile und Stützstreben kann eine exakte Parallelität nicht gewährleistet werden. Aus denselben Gründen ist die Einhaltung vorgegebener Toleranzen im Hinblick auf das Längen- und Breitenmaß des Rahmens schwierig. Es ist daher erforderlich, die Parallelität der Laufschienen und/oder eine leichtgängige Verschiebbarkeit des Rollwagens auf andere Weise sicherzustellen. Dazu werden einerseits zusätzliche Arbeitsschritte bei der Herstellung und/oder beim Zusammenbau des Rahmens benötigt, was mit einer unerwünschten Steigerung der Produktionskosten verbunden ist. Andererseits müssen vergleichsweise große Herstellungstoleranzen in Kauf genommen werden, was ebenfalls in der Regel unerwünscht ist.

Ausgehend davon liegt der Erfindung das technische Problem zugrunde, die Zustiegs-und/oder Zufahrtshilfe der eingangs bezeichneten Gattung mit einem Rahmen zu versehen, der mit engen Toleranzen und dennoch vergleichsweise preisgünstig herstellbar ist.

Zur Lösung dieses Problems wird erfindungsgemäß vorgeschlagen, die Seitenteile, das Endprofil und die Stützstrebe(n) des Rahmens mit formschlüssig ineinander greifenden Positionierungsmitteln zu versehen.

Durch die erfindungsgemäßen Positionierungsmittel ist nicht nur Länge und Breite des Rahmens festgelegt, sondern auch sichergestellt, daß die Seitenteile exakt parallel angeordnet werden. Der erfindungsgemäße Rahmen bringt daher vor allem in der Serienfertigung erhebliche Vorteile mit sich. Das gilt insbesondere dann, wenn die Positionierungsmittel nach Art von Puzzleteilen aus ineinander greifenden Aussparungen und Ansätzen bestehen. Derartige Aussparungen und Ansätze lassen sich mit hoher Präzision beispielsweise durch Stanzen, mit besonderem Vorteil jedoch durch Laserschneiden herstellen. Außerdem ermöglicht es die Erfindung, die Rahmenteile, soweit erforderlich, trotz des Vorhandenseins der Positionierungsmittel als U-förmig gebogene Blechformteile herzustellen, was die Produktionskosten erniedrigt, ohne die engen Toleranzen zu erhöhen.

Weitere vorteilhafte Merkmale der Erfindung ergeben sich aus den Unteransprüchen.

Die Erfindung wird nachfolgend in Verbindung mit den beiligenden Zeichnungen an Ausführungsbeispielen näher erläutert. Es zeigen:
Fig. 1 eine schematische perspektivische Ansicht einer erfindungsgemäßen Zustiegs-und/oder Zufahrtshilfe mit einem Rahmen und einer an diesem ein- und ausfahrbar gelagerten Trittplatte;
Fig. 2 eine schematische perspektivische Ansicht eines in dem Rahmen der Zustiegs-und/oder Zufahrtshilfe nach Fig. 1 verschiebbar geführten, mit der Trittplatte gekoppelten Rollwagens;
Fig. 3 eine Draufsicht auf ein Ausführungsbeispiel von erfindungsgemäßen, zur Verbindung von zwei Rahmenteilen bestimmten Positionierungsmitteln;
Fig. 4 eine perspektivische Darstellung einer Eckverbindung zwischen einem Seitenteil und einem Endprofil des Rahmens nach Fig. 1;
Fig. 5 eine schematische Draufsicht auf einen zur Herstellung des Seitenteils und des Endprofils nach Fig. 4 verwendeten Blechzuschnitts;
Fig. 6 ein zweites Ausführungsbeispiel von entsprechend Fig. 3 verwendbaren Positionierungsmitteln;
Fig. 7 eine Unteransicht einer Verbindung zwischen einem Seitenteil und einer Stützstrebe des Rahmens nach Fig. 1; und
Fig. 8 die Verbindung nach Fig. 7 in einer perspektivischen Ansicht von oben her.

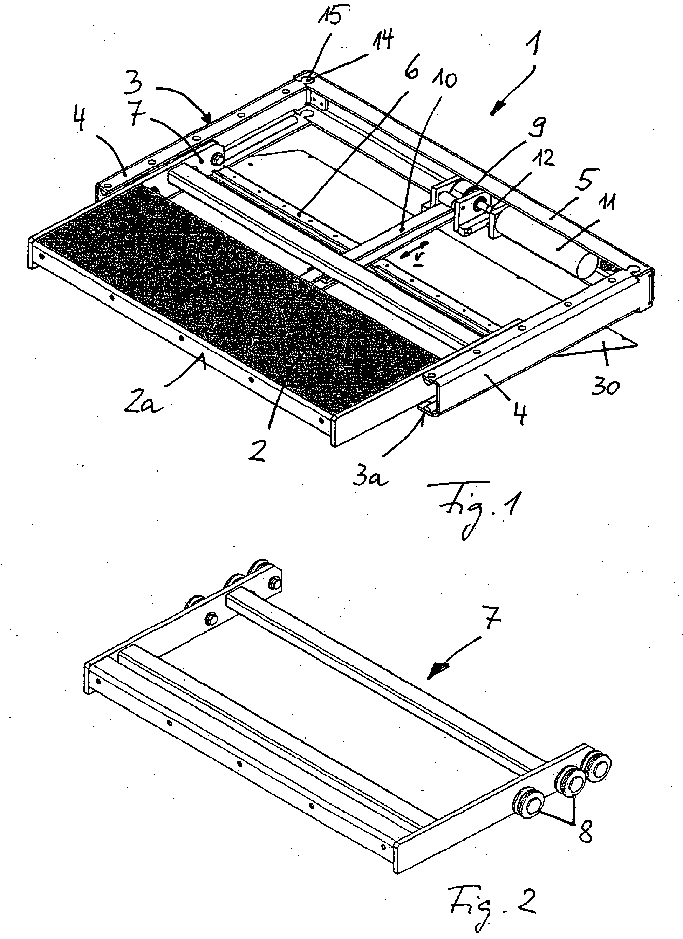

Fig. 1 zeigt ein Zustiegs- und/oder Zufahrtshilfe 1 mit einer Trittplatte 2, die z.B. an einem Autobus od. dgl. ausgebildet ist. Die Zustiegs- und/oder Zufahrtshilfe 1 nach Fig. 1 weist einen rechteckförmigen Rahmen 3 mit zwei parallelen Seitenteilen 4 auf, die an hinteren Enden durch ein Endprofil 5 und in einem davon beabstandeten, z.B. mittleren Teil durch wenigstens eine Stütze 6 verbunden sind. Die Seitenteile 4 sind vorzugsweise als nach innen offene, U-förmige Führungen ausgebildet, in denen ein Rollwagen 7 (Fig. 2) mittels Laufrädern 8 verschiebbar geführt ist. An einem Vorderende ist der Rollwagen 7 an ein Hinterende der Trittplatte 2 gekoppelt. Dadurch kann die Trittplatte 2 vom Rollwagen 7 parallel zu den Seitenteilen 4 vor- und zurückgeschoben und dadurch, bezogen auf das nicht gezeigte Fahrzeug, entweder über ein Vorderende 3a des Rahmens 3 hinaus in eine ausgefahrene, aus Fig. 1 ersichtliche Position vorgeschoben oder in eine eingefahrene Position zurückgezogen werden, in welcher eine Vorderkante 2a der Trittplatte 2 im wesentlichen bündig mit der Vorderseite 3a des Rahmens 3 abschließt. Außerdem kann die Trittplatte 2 in an sich bekannter Weise schwenkbar mit dem Rollwagen 7 gekoppelt sein, um im ausgefahrenen Zustand eine leicht nach unten geneigte, zu einem Stand- oder Wartebereich führende Rampe zu bilden, sofern der Stand- oder Wartebereich nicht niveaugleich mit dem Rahmen 3 angeordnet ist.

Ist eine Verschwenkung der Trittplatte nicht erforderlich, kann sie in einem hinteren Bereich auch selbst mit den Laufrädern 8 versehen sein und der Rollwagen 7 ganz weggelassen werden.

In einem vorderen Bereich des Rahmens 3 ist eine nicht dargestellte, drehbar gelagerte Umlenkrolle montiert, die mit einer Antriebsrolle 9 zusammenwirkt, die am Endprofil 5 drehbar gelagert ist. Beide Rollen sind in der Mitte zwischen den beiden Seitenteilen 4 angeordnet und weisen parallel zu den Achsen der Laufrolle 8 (Fig. 2) des Rollwagens 7 erstreckte Drehachsen auf. Die beiden Rollen dienen zur Führung eines endlosen, z.B. als Kette oder Zahnriemen ausgebildeten Antriebselements 10, das mit einem hinteren Ende des Rollwagens 7 oder der Trittplatte 2 verbunden und in der Mitte zwischen den Seitenteilen 4 und parallel zu diesen erstreckt ist. Zum Antrieb ist ein Motor 11 vorgesehen, der am Endprofil 5 montiert ist und eine koaxial zur Drehachse der Antriebsrolle 9 angeordnete Abtriebswelle 12 aufweist, die über eine nicht dargestellte Kupplung mit einer Antriebswelle der Antriebsrolle 9 verbunden ist. Der Motor 11 ist vorzugsweise als Reversiermotor ausgebildet, so daß seine Abtriebswelle wahlweise in der einen oder anderen Drehrichtung gedreht werden kann. Dadurch sind das Antriebselement 10 und mit ihm auch der Rollwagen 7 und die Trittplatte 2 in Richtung eines Doppelpfeils v (Fig. 1) hin- und herbewegbar.

Damit der Rollwagen 7 leichtgängig verschiebbar ist, müssen die Seitenteile 4 mit geringen Toleranzen (z.B. im Bereich von 1/10 mm) unabhängig davon exakt parallel angeordnet sein, wie lang sie im Einzelfall sind (z.B. bis zu 1500 mm) und wie breit der Rahmen 7 ist (z.B. bis zu 1500 mm). Um dies zu erreichen, wird erfindungsgemäß wie folgt vorgegangen.

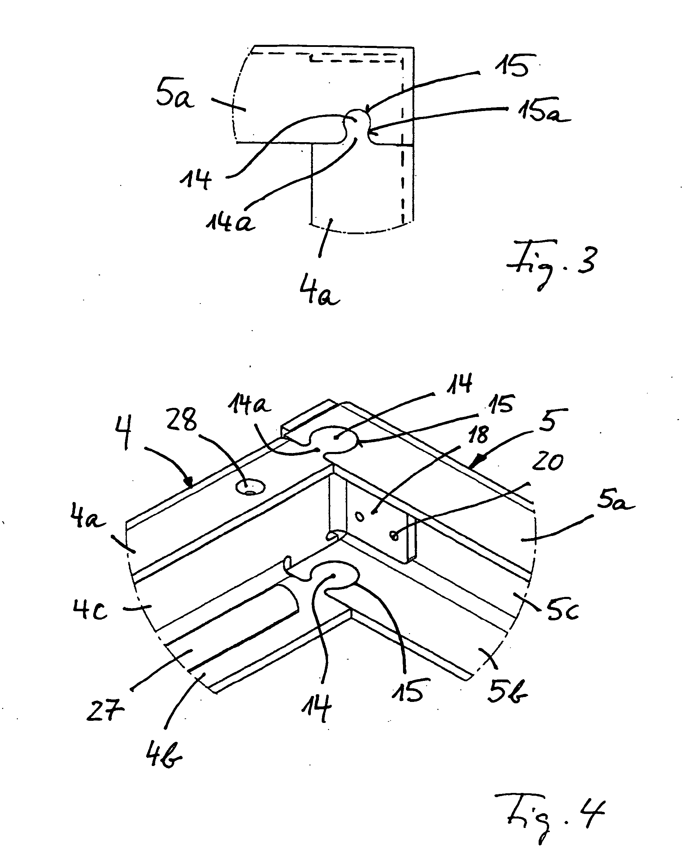

Die Seitenteile 4, das Endprofil 5 und die Stützstrebe 6 werden überall dort, wo sie miteinander verbunden werden sollen, mit formschlüssig ineinander greifenden Positionierungsmitteln versehen. Bei dem in Fig. 3 und 4 gezeigten Ausführungsbeispiel, von dem in Fig. 3 eine Draufsicht auf eine in Fig. 1 obere, rechte Ecke des Rahmens 3 und in Fig. 4 eine perspektivische Ansicht einer in Fig. 1 linken oberen Ecke des Rahmens 3 gezeigt ist, haben die Seitenteile 4 und das Endprofil 5 U-förmige Querschnitte und daher je zwei Längsstege 4a, 4b bzw. 5a, 5b und je einen diese verbindenden Mittelsteg 4c bzw. 5c. Ferner sind die Seitenteile 4 an ihren mit dem Endprofil 5 verbundenen Enden mit an die Längsstege 4a, 4b angeformten, ersten Positionierungsmitteln und das Endprofil 5 an seinen zugeordneten Enden mit in den Längsstegen 5a, 5b ausgebildeten zweiten Positionierungsmitteln versehen. Die ersten Positionierungsmittel bestehen vorzugsweise aus z.B. kreisförmigen Ansätzen 14 und mit diesen verbundenen Stegen 14a, mittels derer sie an den Längsstegen 4a, 4b angebracht sind. Dagegen bestehen die zweiten Positionierungsmittel vorzugsweise aus die Ansätze 14 aufnehmenden kreisförmigen Aussparungen 15 und die Stege 14a aufnehmenden, in den Aussparungen 15 mündenden Schlitzen 15a, die außerdem an die Ränder der Längsstege 5a, 5b grenzen. Dadurch ist es möglich, wie insbesondere Fig. 3 und 4 zeigen, das Endprofil 5 an seinen Enden auf die Seitenteile 4 so aufzustecken, daß die Ansätze 14 und die Stege 14a nach Art eines Puzzles in die Aussparungen 15 und die Schlitze 15a eintreten und dann in diesen formschlüssig und mit exakter relativer Positionierung gehalten werden.

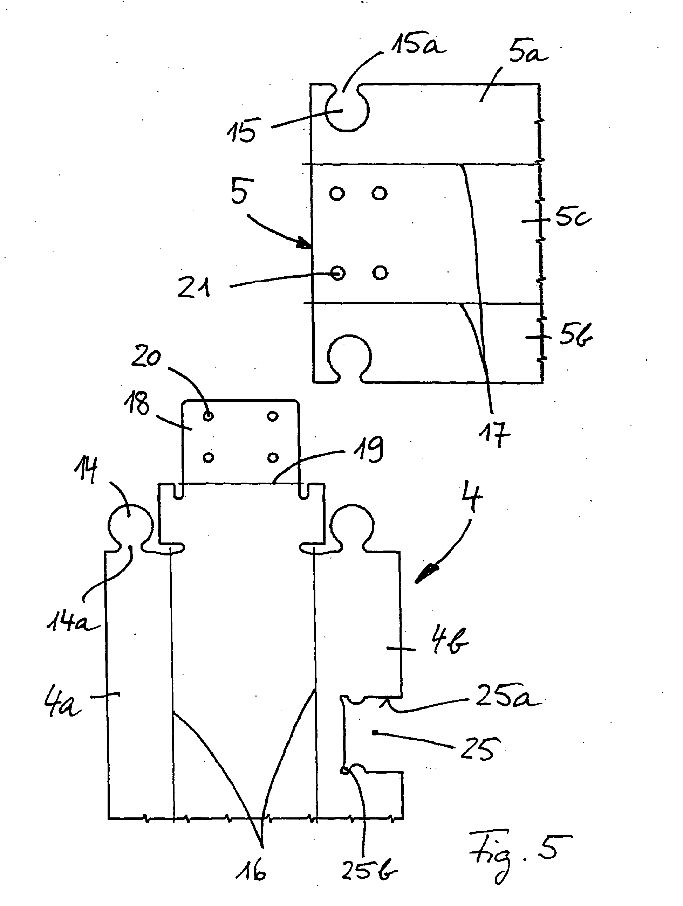

Die Seitenteile 4 und das Endprofil 5 bestehen vorzugsweise aus U-förmig gebogenen Blechformteilen. Wie insbesondere Fig. 5 zeigt, werden die Seitenteile 4 und das Endprofil 5 aus ursprünglich flachen Blechzuschnitten od. dgl. hergestellt, in denen die ersten und zweiten Positionierungsmittel 14, 14a und 15, 15a z.B. durch Laserschneiden ausgebildet werden, was mit sehr engen Toleranzen erfolgen kann. Im Anschluß daran werden die Blechzuschnitte längs schematisch angedeuteter Biegelinien 16 bzw. 17 (Fig. 5) um jeweils 90 ° zu derselben Seite hin umgebogen, um die U-förmigen, aus Fig. 4 ersichtlichen Querschnitte zu erhalten. Dabei ist klar, daß die Biegelinien 16, 17 nur schematisch dargestellt sind und die Zuschnitte tatsächlich nicht scharfkantig abgekantet, sondern mit kleinen Krümmungsradien umgebogen werden.

Wie Fig. 5 weiter zeigt, werden an die Enden der Mittelstege 4c der Seitenteile 4 (und/oder die Enden der Mittelstege 5c des Endprofils 5) zusätzlich Befestigungslaschen 18 angeformt, die längs einer weiteren Biegelinie 19 ebenfalls um ca. 90° und zu derselben Seite wie die Längsstege 4a, 4b umgebogen und mit Schraublöchern 20 versehen werden. Diese Befestigungslaschen 18 legen sich beim Verbinden des Endprofils 5 mit den Seitenteilen 4 von innen und derart gegen die Mittelstege 5c des Endprofils 5 (bzw. des betreffenden Seitenteils 4), daß ihre Schraublöcher 20 auf in den Mittelstegen 5c (bzw. 4c) ausgebildete Schraublöcher 21 koaxial ausgerichtet sind. Mit Hilfe von nicht dargestellten, die Schraublöcher 20, 21 durchragender Befestigungsschrauben werden die Seitenteile 4 und das Endprofil 5 dann fest miteinander verbunden, wobei ihre exakte relative Positionierung auch weiterhin durch die ersten und zweiten Positionierungsmittel vorgegeben ist.

Die ersten und zweiten Positionierungsmittel 14, 14a und 15, 15a können anstatt durch kreisförmige Ansätze und Aussparungen auch durch dreieckige Ansätze und Aussparungen oder solche mit anderen Querschnittsformen realisiert werden. Wichtig ist nur, daß die Positionierungsmittel jeweils formschlüssig zusammenpassen und dadurch die relativen Lagen der Seitenteile 4 und der Endprofile 5 in Längs- und Querrichtung eindeutig und mit engen Toleranzen festlegen. Daher ist es natürlich auch möglich, die ersten Positionierungsmittel als Aussparungen und die zweiten Positionierungsmittel als Ansätze auszubilden oder jeweils Kombinationen von beiden vorzusehen.

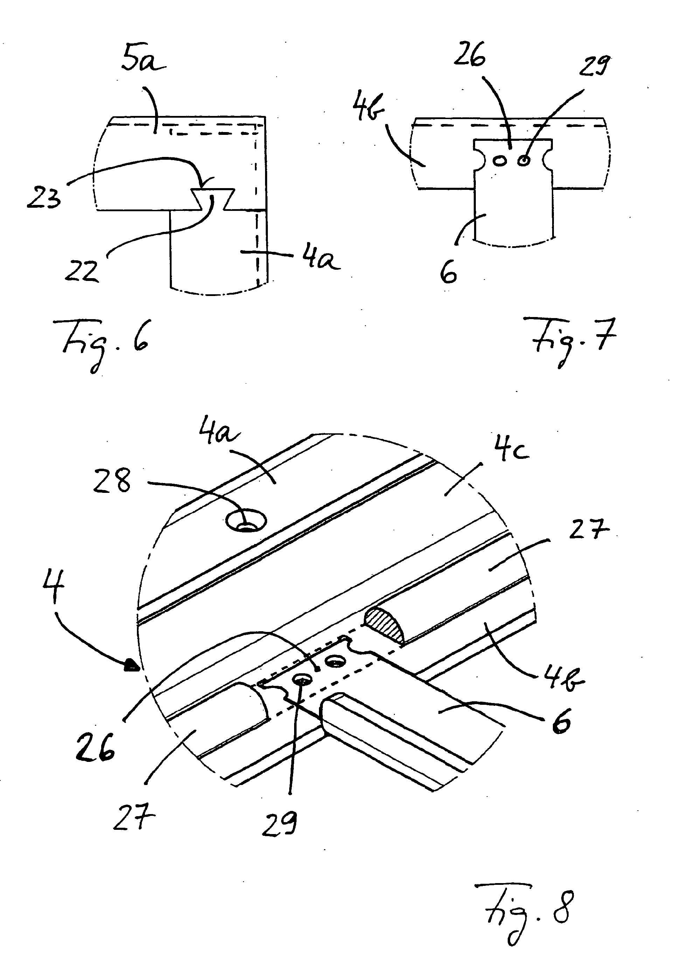

Die Verbindung der Seitenteile 4 mit der Stützstrebe 6 erfolgt zweckmäßig in entsprechender Weise, wie Fig. 5, 7 und 8 zeigen. Im Ausführungsbeispiel sind die in Fig. 1 und 8 unteren Längsstege 4b der Seitenteile 4 mit dritten Positionierungsmitteln versehen, die grundsätzlich wie die zweiten Positionierungsmitteln 15, 15a ausgebildet sein könnten, im Ausführungsbeispiel aber eine etwas andere Form haben. Sie bestehen insbesondere aus Aussparungen 25 mit quer zu den Seitenteilen 4 bzw. quer zu denen Biegelinien 16 verlaufenden, vorzugsweise parallelen Seitenkanten 25a, die an die Seitenränder der Längsstege 4b grenzen, sowie aus an die Seitenkanten 25a nach innen hin anschließenden Erweiterungen 25b, so daß die dritten Positionierungsmittel 25, 25a, 25b insgesamt aus Ausschnitten mit einer im wesentlichen T-förmigen Kontur bestehen. Diese Ausschnitte werden zweckmäßig vor dem Biegevorgang hergestellt und sind wie die Aussparungen 15 und Schlitze 15a zu den Rändern hin offen.

Das andere, in Fig. 4 nicht sichtbare Seitenteil 4 wird an seinem unteren Längssteg 4b mit entsprechenden dritten Positionierungsmitteln versehen, die jedoch spiegelsymmmetrisch zu den Positionierungsmitteln 25, 25a, 25b gemäß Fig. 5 ausgebildet sind.

Die Stützstrebe 6 wird an ihren beiden Enden mit vierten Positionierungsmitteln (Fig. 7 und 8) in Form von Asätzen 26 versehen, die eine der Innenkontur der Aussparungen 25 der dritten Positionierungsmittel entsprechende Außenkontur haben und daher mit geringen Toleranzen und puzzleartig in die dritten Positionierungsmittel eingelegt werden können. Dabei bringt die beschriebene Form der dritten und vierten Positionierungsmittel und insbesondere das Vorhandensein der Seitenkanten 25a und ensprechender Seitenkanten an den Ansätzen 26 den Vorteil mit sich, daß die Stützstreben 6 weitgehend verdrehsicher in den Seitenteilen 4 zu liegen kommen, d.h. die Positionierungsmittel 25 und 26 nicht als Schwenklager senkrecht zu der von den Längsstegen 4b und den vorzugsweise aus Flachstäben hergestellten Stützstreben 6 gebildeten Ebene wirken. Nach dem Einlegen der vierten Positionierungsmittel 26 in die dritten Positionierungsmittel 25, 25a, 25b liegen die Oberflächen der Stützstreben 6 und der Längsstege 4b vorzugsweise in einer gemeinsamen Ebene.

Die Herstellung der dritten und vierten Positionierungsmittel 25, 26 erfolgt wie die der ersten und zweiten Positionierungsmittel 14, 15 vorzugsweise durch Laserschneiden und bei den Seitenteilen 4 vor dem Biegevorgang (Fig. 5). Auch hier ist es möglich, die dritten Positionierungsmittel als Ansätze und die vierten Positionierungsmittel als Aussparungen auszubilden oder Kombinationen davon vorzusehen.

Eine feste Verbindung der Seitenteile 4 mit der Stützstrebe 6 wird im Ausführungsbeispiel mit Hilfe von Laufschienen 27 (Fig. 8) geschaffen, die auf die einander zugewandten Innenseiten der Längsstege 4a, 4b aufgelegt werden und zur nicht näher dargestellten Abstützung und Führung der Laufräder 8 des Rollwagens 7 (Fig. 2) dienen. Zu diesem Zweck weisen die Laufschienen 27 an ihren Unterseiten vorzugsweise als Blindbohrungen ausgebildete, nicht dargestellte Gewindebohrungen auf, die nach dem Auflegen der Laufschienen 27 auf die Längsstege 4a, 4b auf durchgehende, in den Längsstegen 4a, 4b ausgebildete Schraublöcher 28 (Fig. 8) ausgerichtet sind. Durch von außen her eingedrehte Befestigungsschrauben werden die Laufschienen 27 sodann an den Längsstegen 4a, 4b fixiert.

An denjenigen Stellen, an denen die die dritten Positionierungsmittel bildenden Aussparungen bzw. Ausschnitte 25 (Fig. 5) liegen, weisen die in Fig. 8 unterbrochen dargestellten Laufschienen 27 ebenfalls wenigstens eine Gewindebohrung auf, die auf wenigstens ein durchgehendes Schraubloch 29 in den die vierten Positionierungsmittel bildenden Ansätzen 26 ausgerichtet sind. Eine das Schraubloch 29 von außen her durchragende Befestigungsschraube kann daher in die betreffende Gewindebohrung der Laufschiene 27 eingedreht werden, bis ihr Kopf von unten an dem das vierte Positionierungsmittel bildenden Ansatz 26 anliegt und diesen dadurch fest mit der Laufschiene 27 und über diese mit dem Rahmen 3 (Fig. 1) verbindet. Natürlich können auch wie gezeigt zwei oder mehr Befestigungsschrauben pro Ansatz 26 verwendet werden.

Bei Bedarf können ferner mehrere derartige Stützstreben 6 mit den Seitenteilen 4 verbunden werden, insbesondere auch an dem Vorderende 3a (Fig. 1) des Rahmens 3. Die Verbindung kann dabei ebenfalls auf die anhand der Fig. 7 und 8 beschriebene Weise erfolgen. Eine dieser Stützstreben 6 kann außerdem zur Befestigung der nicht gezeigten Umlenkrolle für das Antriebselement 10 (Fig. 1) dienen.

An den Unterseiten der Längsstege 4b, 5b der Seitenteile 4 und des Endprofils 5 und ggf. der Stützstreben(n) 6 kann ein den Rahmen 3 nach unten hin abdeckender, nicht dargestellter Boden befestigt sein, der den Innenraum des Rahmens 3 und die darin befindlichen Laufräder 8 und Antriebsteile 9 bis 12 vor Verunreinigungen schützt. Dieser Boden weist vorzugsweise eine schwenkbare Serviceklappe (Fig. 1) auf, die nach unten schwenkbar ist und trotz der Abdeckung bei Bedarf einen einfachen Zugang zu den im hinteren Bereich des Rahmens 3 liegenden Antriebsteilen 9 bis 12 ermöglicht, was insbesondere für Servicezwecke (Reinigung, Reparatur, Wartung usw.) vorteilhaft ist und eine umständliche Demontage des ganzen Rahmens 3 od. dgl. unnötig macht. Alternativ kann vorgesehen sein, den Boden nur bis zu der letzten hinteren Stützstrebe 6 zu erstrecken und die Serviceklappe 30 mittels eines Scharnierbandes od. dgl. schwenkbar an dieser Stützstrebe 6 zu befestigen.

Ein besonders wesentlicher Vorteil der beschriebenen Zustiegs- und/oder Zufahrtshilfe besteht darin, daß die puzzleartigen Positionierungsmittel eine sehr genaue Anordnung der Teile 4, 5 und 6 relativ zueinander, dadurch eine parallele Ausrichtung der beiden Seitenteile 4 und eine insgesamt äußerst verwindungssteife Rahmenkonstruktion ermögichen. Außerdem lassen sich leicht Rahmen 3 mit unterschiedlichen Abmessungen herstellen, da es hierfür nur erforderlich ist, unterschiedlich lange Seitenteile 4, Endprofile 5 und Stützstreben 6 vorzusehen, die sämtlich dieselben ersten bis vierten Positionierungsmittel aufweisen können.

Die Erfindung ist nicht auf die beschriebenen Ausführungsbeispiele beschränkt, die auf vielfache Weise abgewandelt werden können. Das gilt insbesondere für die Form und die Dimensionierung der Positionierungsmittel, die allerdings vorzugsweise stets so ausgebildet werden, daß sie in der beschriebenen Weise einfach gefertigt werden können. Weiter ist es möglich, die ersten bis vierten Positionierungsmittel auf andere Weise als durch Laserschneiden, insbesondere z.B. durch Stanzen herzustellen. Bei Rahmen 3 kleiner Baugrößen kann es weiterhin auseichend sein, die Stützstrebe 6 nur am Vorderende 3a (Fig. 1) des Rahmens 3 anstatt auch oder nur in einem mittleren Teil vorzusehen und ggf. die Serviceklappe 30 entfallen zu lassen. Weiter können die Laufräder 8 auch im hinteren Bereich der Trittplatte 2 angebracht werden, in welchem Fall ein zusätzlicher Rollwagen nicht benötigt wird. Schließlich versteht sich, daß die verschiedenen Merkmale auch in anderen als den beschriebenen und dargestellten Kombinationen angewendet werden können.

## Patentansprüche

1. Zustiegs- und/oder Zufahrtshilfe für Fahrzeuge zur Personenbeförderung mit einem rechteckförmigen Rahmen (3), der zwei parallel angeordnete Seitenteile (4) aufweist, die an hinteren Enden durch ein Endprofil (5) und in einem davon beabstandeten Bereich durch wenigstens eine Stützstrebe (6) fest miteinander verbunden sind, und mit einer an den Seitenteilen (4) fahrbar gelagerten Trittplatte (2), **dadurch gekennzeichnet, dass** die Seitenteile (4) das Endprofil (5) und die Stützstrebe (6) mit formschlüssig ineinander greifenden Positionierungsmitleln (14, 14a, 15, 15a; 25, 25a, 25b, 26) versehen sind, und dass die Seitenteile (4) je einen Mittelsteg (4c) und zwei U-förmig mit diesem verbundene Längsstege (4a, 4b) aufweisen und die Längsstege (4a, 4b) an ihren Enden mit ersten Positionierungsmitteln (14, 14a) versehen sind, die mit an zugeordneten Endes des Endprofils (5) ausgebildeten zweiten Positionierungsmitteln (15, 15a) formschlüssig zusammenwirken.

2. Zustiegs- und/oder Zufahrtshilfe nach Anspruch 1, **dadurch gekennzeichnet, dass** das Endprofil (5) einen Mittelsteg (5c) und zwei U-förmig mit diesem verbundene Längsstege (5a, 5b) aufweist und die Längsstege (5a, 5b) an ihren Enden mit den zweiten Positionierungsmitteln (15,15a) versehen sind.

3. Zustiegs- und/oder Zufahrtshilfe nach Anspruch 1 oder 2, **dadurch gekennzeichnet, dass** je einer der Längsstege (4b) der Seitenteile (4) mit wenigstens je einem dritten Positionierungsmittel (25, 25a, 25b) versehen ist und die Stützstrebe (6) an ihren Enden vierte, mit den dritten Positionierungsmitteln (25, 25; 25b) formschlüssig zusammenwirkende Positionierungsmittel (26) aufweist.

4. Zustiegs- und/oder Zufahrtshilfe nach einem der Ansprüche 1 bis 3, **dadurch gekennzeichnet, dass** die zweiten und/oder dritten Positionierungsmittel aus Aussparungen (15, 15a; 25, 25a, 25b) und die ersten und/oder vierten Positionierungsmittel aus in diese eingesetzten Ansätzen (14, 14a; 26) bestehen.

5. Zustiegs- und/oder Zufahrtshilfe nach einem der Ansprüche 1 bis 4, **dadurch gekennzeichnet, dass** die Seitenteile (4) und das Endprofil (5) aus U-förmig gebogenen Blechformteilen bestehen.

6. Zustiegs- und/oder Zufahrtshilfe nach einem der Ansprüche 1 bis 5, **dadurch gekennzeichnet, dass** die Stützstrebe (6) aus einem Flachstab besteht.

7. Zustiegs- und/oder Zufahrtshilfe nach einem der Ansprüche 1 bis 6, **dadurch gekennzeichnet, dass** auf einander zugewandten Innenseiten der Längsstege (4a, 4b) der Seitenteile (4) je eine Laufschiene (27) für an der Trittplatte (2) oder einem an diese angekoppelten Rollwagen (7) drehbar gelagerte Laufräder (8) befestigt ist.

8. Zustiegs- und/oder Zufahrtshilfe nach Anspruch 7, **dadurch gekennzeichnet, dass** die dritten Positionierungsmittel aus Aussparungen (25, 25a, 25b) in unteren Längsstegen (4b) der Seitenteile (4) und die vierten Positionierungsmittel aus in diese Aussparungen (25, 25a, 25b) passenden Ansätzen (26) bestehen und dass die Stützstrebe (6) mittels die Ansätze (26) durchragender Schraubgen an den Laufschienen (27) befestigt sind.

9. Zustiegs- und/oder Zufahrtshilfe nach einem der Ansprüche 1 bis 8, **dadurch gekennzeichnet, dass** die Positionierungsmittel (14, 14a, 15, 15a; 25, 25a, 25b, 26) durch Laserschneiden hergestellt sind.

10. Zustiegs- und/oder Zufahrtshilfe nach einem der Ansprüche 1 bis 9, **dadurch gekennzeichnet, dass** die Seitenteile (4) und/oder das Endprofil (5) an ihren Enden mit der gegenseitigen Befestigung dienenden, abgewinkelten Befestigungslaschen (18) versehen sind.

11. Zustiegs- und/oder Zufahrtshilfe nach Anspruch 10, **dadurch gekennzeichnet, dass** die Befestigungslaschen (18) mit Schraublöchern (20) versehen sind.

12. Zustiegs- und/oder Zufahrtshilfe nach einem der Ansprüche 1 bis 11, **dadurch gekennzeichnet, dass** an den Unterseiten der Seitenteile (4) und/oder des Endprofils (5) ein den Innenraum des Rahmen (3) abdeckender Boden befestigt ist.

13. Zustiegs- und/oder Zufahrtshilfe nach Anspruch 12, **dadurch gekennzeichnet, dass** der Rahmen (3) in einem hinteren Bereich eine nach unten schwenkbare Serviceklappe (30) aufweist.

## Claims

1. A boarding and/or entry aid for vehicles for carrying passengers, having a rectangular frame (3) that has two parallel lateral parts (4), which are solidly joined together at rear ends by an end profile (5) and, in a region spaced apart from it, by at least one bracing strut (6), and having a step plate (2), supported movably on the lateral parts (4), **characterized in that** the lateral parts (4), the end profile (5), and the bracing strut (6) are provided with positioning means (14, 14a, 15, 15a; 25, 25a, 25b, 26) that engage one another in form-locking fashion and that the lateral parts (4) each have one middle bar (4c) and two longitudinal bars (4a, 4b) joined to it in the shape of a U, and the longitudinal bars (4a, 4b) are provided on their ends with first positioning means (14, 14a), which cooperate in form-locking fashion with second positioning means (15, 15a) embodied on associated ends of the end profile (5).

2. The boarding and/or entry aid as defined by claim 1, **characterized in that** the end profile (5) has a middle bar (5c) and two longitudinal bars (5a, 5b) joined to it in the shape of a U, and the longitudinal bars (5a, 5b) are provided on their ends with second positioning means (15, 15a).

3. The boarding and/or entry aid as defined by claims 1 or 2, **characterized in that** each of the longitudinal bars (4b) of the lateral parts (4) is provided with at least one third positioning means (25, 25a, 25b) each, and the bracing struts (6), on their ends, have fourth positioning means (26) that cooperate in form-locking fashion with the third positioning means (25, 25a, 25b).

4. The boarding and/or entry aid as defined by claims 1-3, **characterized in that** the second and/or third positioning means comprise recesses (15, 15a; 25, 25a, 25b), and the first and/or fourth positioning means comprise extensions (14, 14a; 26) inserted into the recesses.

5. The boarding and/or entry aid as defined by claims 1-4, **characterized in that** the lateral parts (4) and the end profile (5) comprise shaped sheet-metal parts bent into the shape of a U.

6. The boarding and/or entry aid as defined by claims 1-5, **characterized in that** the bracing strut (6) comprises a flat bar.

7. The boarding and/or entry aid as defined by claims 1-6, **characterized in that** one rail (27) for wheels (8) rotatably supported on the step plate (2) or on a rolling carriage (7) coupled to the step plate is secured to each of the inner sides, facing one another, of the longitudinal bars (4a, 4b) of the lateral parts (4).

8. The boarding and/or entry aid as defined by claim 7, **characterized in that** the third positioning means comprise recesses (25, 25a, 25b) in lower longitudinal bars (4b) of the lateral parts (4), and the fourth positioning means comprise extensions (26) that fit into these recesses (25, 25a, 25b); and that the bracing strut (6) is secured to the rails (27) by means of screws that pass through the extensions (26).

9. The boarding and/or entry aid as defined by claims 1-8, **characterized in that** the positioning means (14, 14a, 15, 15a; 25, 25a, 25b, 26) are produced by laser cutting.

10. The boarding and/or entry aid as defined by claims 1-9, **characterized in that** the lateral parts (4) and/or the end profile (5) are provided on their ends with angled securing plates (18) for securing each other.

11. The boarding and/or entry aid as defined by claims 1-10, **characterized in that** the securing plates (18) are provided with screw holes (20).

12. The boarding and/or entry aid as defined by claims 1-11, **characterized in that** a base that covers the interior of the frame (3) is secured to the undersides of the lateral parts (4) and/or of the end profile (5).

13. The boarding and/or entry aid as defined by claim 12, **characterized in that** the frame (3), in a rear region, has a servicing hatch (30) that can be pivoted downward.

## Revendications

1. Aide à l'entrée et/ou à l'accès pour véhicules de transport de personnes, comprenant un cadre (3) rectangulaire avec deux parties latérales (4) parallèles, qui sont reliées aux extrémités arrière par un profilé d'extrémité (5) et sont assemblées l'une à l'autre dans une zone distante de celui-ci par au moins une entretoise (6), et avec une palette de marchepied (2) supportée sur les parties latérales (4) de façon à pouvoir être déplacée, **caractérisée en ce que** les parties latérales (4), le profilé d'extrémité (5) et l'entretoise (6) sont munis de moyens de positionnement (14, 14a, 15, 15a ; 25, 25a, 25b, 26) se mettant en prise les uns avec les autres en correspondance de forme, et **en ce que** les parties latérales (4) présentent chacune une barrette centrale (4c) et deux barrettes longitudinales (4a, 4b) reliées avec celle-ci pour former un U et les barrettes longitudinales (4a, 4b) sont munies à leurs extrémités de premiers moyens de positionnement (14, 14a) qui coopèrent en correspondance de forme avec des deuxièmes moyens de positionnement (15, 15a) formées à l'extrémité correspondante du profilé d'extrémité (5).

2. Aide à l'entrée et/ou à l'accès selon la revendication 1, **caractérisée en ce que** la profilé d'extrémité (5) présente une barrette centrale (5c) et deux barrettes longitudinales (5a, 5b) reliées à celle-ci pour former un U et les barrettes longitudinales (5a, 5b) sont munies à leurs extrémités des deuxièmes moyens de positionnement (15, 15a).

3. Aide à l'entrée et/ou à l'accès selon la revendication 1 ou 2, **caractérisée en ce que** chacune des barrettes longitudinales (4b) des parties latérales (4) est munie d'au moins un troisième moyen de positionnement (25, 25a, 25b) et l'entretoise (6) présente à ses extrémités des quatrièmes moyens de positionnement (26) coopérant en correspondance de forme avec les troisièmes moyens de positionnement (25, 25 ; 25b).

4. Aide à l'entrée et/ou à l'accès selon l'une des revendications 1 à 3, **caractérisée en ce que** les deuxièmes et/ou troisièmes moyens de positionnement sont formés d'ouvertures (15, 15a ; 25, 25a, 25b) et les premiers et/ou quatrièmes moyens de positionnement de saillies (14, 14a ; 26) introduits dans celles-ci.

5. Aide à l'entrée et/ou à l'accès selon l'une des revendications 1 à 4, **caractérisée en ce que** les parties latérales (4) et le profilé d'extrémité (5) sont formées de pièces en tôle mises en forme par cintrage en U.

6. Aide à l'entrée et/ou à l'accès selon l'une des revendications 1 à 5, **caractérisée en ce que** l'entretoise (6) est formée par une barre plate.

7. Aide à l'entrée et/ou à l'accès selon l'une des revendications 1 à 6, **caractérisée en ce qu'**un rail de roulement (27) est fixé sur les faces intérieures tournées l'une vers l'autre des barrettes longitudinales (4a, 4b) des parties latérales (4) pour des roues (8) supportées avec possibilité de rotation sur la palette de marchepied (2) ou un chariot roulant (7) couplé à celle-ci.

8. Aide à l'entrée et/ou à l'accès selon la revendication 7, **caractérisée en ce que** les troisièmes moyens de positionnement sont formés par des ouvertures (25, 25a, 25b) dans les barrettes longitudinales inférieures (4b) des parties latérales (4) et les quatrièmes moyens de positionnement par des saillies (26) s'adaptant dans ces ouvertures (25, 25a, 25b) et **en ce que** les entretoises (6) sont fixées sur les rails de roulement (27) au moyen de vis traversant les saillies (26).

9. Aide à l'entrée et/ou à l'accès selon l'une des revendications 1 à 8, **caractérisée en ce que** les moyens de positionnement (14, 14a, 15, 15a ; 25, 25a, 25b, 26) sont fabriqués par découpe au laser.

10. Aide à l'entrée et/ou à l'accès selon l'une des revendications 1 à 9, **caractérisée en ce que** les parties latérales (4) et/ou le profilé d'extrémité (5) sont munis à leurs extrémités de pattes de fixation (18) coudées servant à leur fixation mutuelle.

11. Aide à l'entrée et/ou à l'accès selon la revendication 10, **caractérisée en ce que** les pattes de fixation (18) sont munies de trous de vis (20).

12. Aide à l'entrée et/ou à l'accès selon l'une des revendications 1 à 11, **caractérisée en ce qu'**un fond couvrant l'intérieur du cadre (3) est fixé sur les faces inférieures des parties latérales (4) et/ou du profilé d'extrémité (5).

13. Aide à l'entrée et/ou à l'accès selon la revendication 12, **caractérisée en ce que** le cadre (3) présente dans une partie arrière une trappe de visite (30) pouvant pivoter vers le bas.
